# EUROPEAN PATENT APPLICATION

(11) **EP 1 407 924 A2**
(43) Date of publication of application: **14.04.2004**
(21) Application number: 03004964.7
(22) Date of filing: 10.03.2003
(51) Int. Cl.: B60N 2/30

(54) **Front seat assembly for a vehicle**

(30) Priority: 11.10.2002 KR 2002062066
(71) Applicant: KIA MOTORS CORPORATION, Seoul 137-938 (KR)
(72) Inventor: Cha, Jin-Young, Dobong-gu, Seoul 132-762 (KR)
(74) Representative: Viering, Jentschura & Partner

(57) **Abstract**

Disclosed is a front seat assembly for a vehicle, on which three passengers are sitable. The front seat assembly includes: a driver seat and an assistant seat installed in a front portion of an inside of the vehicle and spaced apart by a predetermined distance, in which each of the driver seat and the assistant seat has a seat cushion for supporting a passenger's lower portion of the body and a seatback installed upright in a rear portion of the seat cushion so as to support the passenger's back; and a middle seat installed between the driver seat and the assistant seat, including a seat cushion foldably installed in the seat cushion of the assistant seat, a seatback foldably installed in a rear portion of the seat cushion of the middle seat, and an armrest protruded behind the seatback of the middle seat so as to allow the driver to put the driver's arm thereon.

## Description

### BACKGROUND OF THE INVENTION

### Field of the Invention

The present invention relates to a front seat assembly for a recreational vehicle (RV), on which three passengers are sitable, and more particularly, to a front seat assembly in which an armrest for a driver is integratedly formed in a seatback of a middle seat.

### Description of the Related Art

As well known, a seat of a vehicle is an element for supporting a passenger's body sitting inside the vehicle. The seat includes a seat cushion for supporting the passenger's lower portion of the body, a seatback for supporting the passenger's back, and a headrest for supporting the passenger's head. In some cases, the seat further includes an armrest for allowing a passenger to put the passenger's arm thereon.

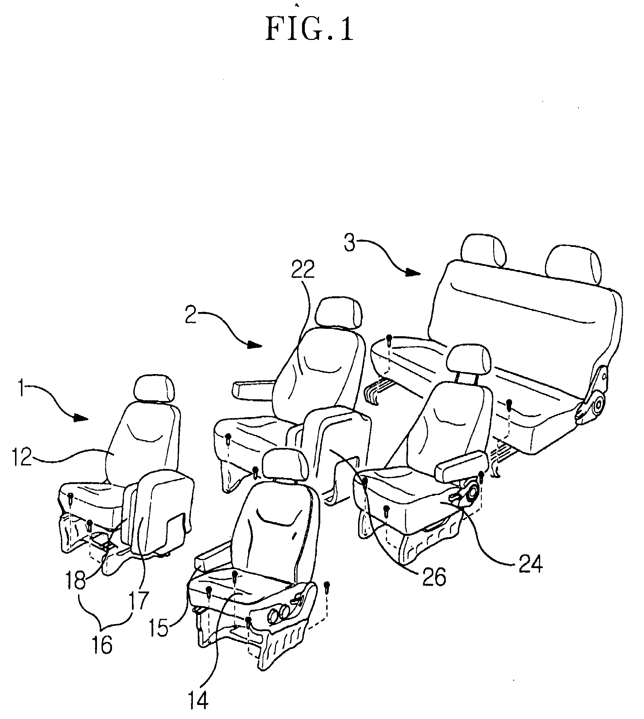

FIG. 1 is a perspective view of a conventional seat assembly for a recreation vehicle (RV), in which vehicle seats are arranged in three rows. As shown, the seat assembly for the RV includes a front seat assembly 1, a first rear seat assembly 2, and a second rear seat assembly 3.

The front seat assembly 1 includes right and left seats 12 and 14 respectively installed on both sides of an inside of the RV, and a middle seat 16. The first rear seat assembly 2 includes right and left seats 22 and 24 respectively installed on both side of the inside of the RV, and a middle seat 26. The second rear seat assembly 3 is formed in one body elongated from one end of the inside of the RV to the other end. Headrests for supporting passengers' heads are installed in upper portions of seatbacks of the left and right seats of the font seat assembly 1 and the first rear seat assembly 2, as well as the second rear seat assembly 3.

In the front seat assembly 1, a seat cushion 17 of the middle seat 16 is installed foldably to that of the right seat (an assistant seat) 12, and a seatback 18 is installed foldably to the seat cushion 17. Accordingly, in the middle seat 16 of the front seat assembly 1, both the seatback 18 and the seat cushion 17, disposed on the right side of the right seat 12, are maintained in a folded state. If necessary, the seatback 18 and the seat cushion 17 can be unfolded so as to allow the passenger to get into the vehicle.

In case of the front seat assembly 1, an armrest 15 on which the driver can put the driver's right arm is installed on the right side of a seatback of the left seat 14 (i.e., the driver seat), in which the armrest 15 is rotatable around its lower end. In case that the armrest 15 is not used, the armrest 15 stands uprightly on the right side of the seatback of the driver seat. Therefore, a left side of the seatback 18 of the middle seat 16 is reduced as much as a width of the armrest 15.

As described above, a passenger sitting on the middle seat may feel uncomfortable due to the armrest installed in the driver seat of the front seat assembly. Therefore, in many cases, the armrest for the driver is not used in case that a passenger sits on the middle seat.

Nevertheless, a width of the seatback of the middle seat is reduced so as to accommodate the armrest, thus causing an inconvenience to the passenger. Additionally, since the width of the middle seat is narrow, a headrest for the middle seat cannot be installed like the headrests installed in the left and right seats. Accordingly, the passenger sitting on the middle seat may feel uneasy and particularly a dangerous situation may occur in an emergency.

### SUMMARY OF THE INVENTION

Accordingly, the present invention is directed to a front seat assembly for a vehicle that substantially obviates one or more problems due to limitations and disadvantages of the related art.

It is an object of the present invention to provide a front seat assembly for a vehicle, in which an armrest for a driver is provided without reducing a width of a middle seat.

To accomplish the above object and other advantages, there is provided a front seat assembly for a vehicle, which comprises: a driver seat and an assistant seat installed in a front portion of an inside of the vehicle and spaced apart by a predetermined distance, in which each of the driver seat and the assistant seat has a seat cushion for supporting a passenger's lower portion of the body and a seatback installed upright in a rear portion of the seat cushion so as to support the passenger's back; and a middle seat installed between the driver seat and the assistant seat, including a seat cushion foldably installed in the seat cushion of the assistant seat, a seatback foldably installed in a rear portion of the seat cushion of the middle seat, and an armrest protruded behind the seatback of the middle seat so as to allow the driver to put the driver's arm thereon.

It is to be understood that both the foregoing general description and the following detailed description of the present invention are exemplary and explanatory and are intended to provide further explanation of the present invention as claimed.

### BRIEF DESCRIPTION OF THE DRAWINGS

The accompanying drawings, which are included to provide a further understanding of the present invention and are incorporated in and constitute a part of this application, illustrate embodiment(s) of the present invention and together with the description serve to explain the principle of the present invention. In the drawings:

FIG. 1 is a perspective view of a conventional front seat assembly for an RV;

FIG. 2 is a perspective view of a front seat assembly for an RV in accordance with an embodiment of the present invention, when a seatback of a middle seat is folded; and

FIG. 3 is a perspective view of the RV front seat assembly in accordance with an embodiment of the present invention, when the seatback of the middle seat is unfolded.

### DETAILED DESCRIPTION OF THE PREFERRED EMBODIMENTS

Reference will now be made in detail to a preferred embodiment of the present invention.

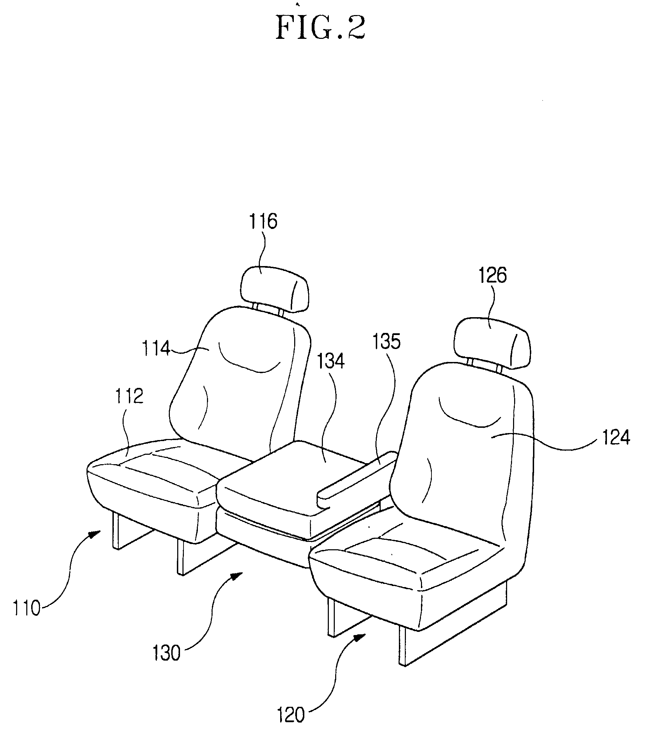

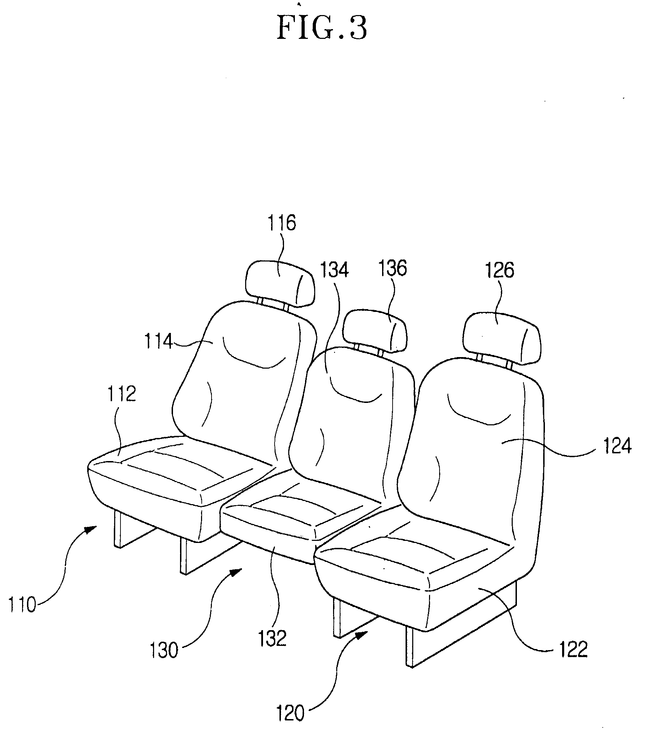

FIGs. 2 and 3 are perspective views of a front seat assembly in accordance with an embodiment of the present invention, when a seatback 134 of a middle seat 130 is folded and unfolded, respectively.

As shown, the front seat assembly of the present invention includes a driver seat 120, an assistant seat 110 and a middle seat 130. Each of the driver seat 120 and the assistant seat 110 is installed in its own floor panel and includes seat cushions 122 and 112 for supporting passenger's lower portion of the body, seatbacks 124 and 114 installed upright in a rear portion of the seat cushions 112 and 112 so as to support passenger's back, and headrests 126 and 116 in upper portions of the seatbacks 124 and 114 so as to support passenger's head.

The middle seat 130 is installed between the driver seat 120 and the assistant seat 110 and includes a seat cushion 132, a seatback 134 and a headrest 136. The seat cushion 132 of the middle cushion 130 is foldably installed in a side portion of the assistant seat 110. The seatback 134 is foldably installed in a rear portion of the seat cushion 132.

As shown in FIG. 2, an armrest 135 is formed behind the seatback 134 so that the driver can put the driver's arm thereon. Preferably, the armrest 135 is formed together with the seatback 134 in one body. More preferably, an armrest (not shown) for a passenger sitting on the assistant seat can be formed behind the seatback 134 of the middle seat 130 so that the passenger sitting on the assistant seat can put the passenger's arm thereon.

Accordingly, unlike the conventional front seat assembly, it is unnecessary to form an armrest on the driver seat 120. Consequently, a width of the seatback 134 of the middle seat 130 can be widened. As shown in FIG. 3, the headrest 136 that is the same as that of the driver seat 120 or the assistant seat 110 can be installed in the upper portion of the seatback 134 of the middle seat 130.

In accordance with an embodiment of the front seat assembly constructed as above, if there is no passenger sitting on the middle seat 130, the seat cushion 132 is unfolded and the seatback 134 is folded, as shown in FIG. 2. In that state, the driver (and the passenger sitting on the assistant seat) can put the driver's arm on the armrest 135 formed behind the seatback 134 of the middle seat 130. If there is a passenger sitting on the middle seat 130, the seatback 134 is unfolded, as shown in FIG. 3. In that case, there is no armrest in the driver seat 120 and the seatback 134 of the middle seat is wide. In addition, since the headrest 136 can be also installed in the seatback 134 of the middle seat 130, a passenger can stably and conveniently sit on the middle seat of the vehicle.

As described above, in the front seat assembly for the vehicle in accordance with the present invention, the armrest for the driver seat is formed behind the seatback of the middle seat. Accordingly, the width of the seatback of the middle seat can be widened and thus the headrest can be installed in the middle seat, too. Therefore, a sense when a passenger gets into the vehicle can be improved, and also a stability of the middle seat can be remarkably improved.

The forgoing embodiment is merely exemplary and is not to be construed as limiting the present invention. The present teachings can be readily applied to other types of apparatuses. The present invention can also apply to the second row seat. The description of the present invention is intended to be illustrative, and not to limit the scope of the claims. Many alternatives, modifications, and variations will be apparent to those skilled in the art.

## Claims

1. A front seat assembly for a vehicle, comprising:
a driver seat and an assistant seat installed in a front portion of an inside of the vehicle and spaced apart by a predetermined distance, each of the driver seat and the assistant seat having a seat cushion for supporting a passenger's lower portion of the body and a seatback installed upright in a rear portion of the seat cushion so as to support the passenger's back; and
a middle seat installed between the driver seat and the assistant seat, including a seat cushion foldably installed in the seat cushion of the assistant seat, a seatback foldably installed in a rear portion of the seat cushion of the middle seat, and an armrest protruded behind the seatback of the middle seat so as to allow the driver to put the driver's arm thereon.

2. The front seat assembly according to claim 1, wherein the middle seat further includes a headrest for supporting a passenger's head, the headrest being installed in an upper portion of the seatback.

3. The front seat assembly according to claim 1 or 2, wherein the middle seat further includes an armrest for the assistant seat, the armrest being protruded behind the seatback of the middle seat on a side of the assistant seat so as to allow a passenger sitting on the assistant seat to put the passenger's arm thereon.
